# EUROPÄISCHE PATENTANMELDUNG

(11) **EP 4 209 156 A1**
(43) Veröffentlichungstag der Anmeldung: **12.07.2023**
(21) Anmeldenummer: 22208149.9
(22) Anmeldetag: 17.11.2022
(51) Int. Cl.: A47J 42/08, A47J 42/18, A47J 31/44

(54) **MAHLEINHEIT FÜR GETRÄNKEZUBEREITUNGSVORRICHTUNG MIT VERBESSERTER MAHLGRADVERSTELLUNG**

(30) Priorität: 10.01.2022 DE 102022100392
(71) Anmelder: Eugster/Frismag AG, 8580 Amriswil (CH)
(72) Erfinder: Eberle, Rainer, 9000 St. Gallen (CH)
(74) Vertreter: Patent- und Rechtsanwälte Behrmann Wagner PartG mbB

(57) **Zusammenfassung**

Mahleinheit **(1)** für eine Getränkezubereitungsvorrichtung **(15)** mit einer Getränkesubstratbevorratungseinrichtung **(2)** und einem Substrat-Mahlwerk **(3)** zum Mahlen von Getränkesubstrat **(23)** zu Substratmehl mit einem ersten und einem zweiten Mahlelement, die mittels eines Antriebs, relativ zueinander um eine Drehachse verdrehbar gelagert sind, wobei der Abstand der Mahlelemente zueinander über eine Mahlgradverstelleinrichtung **(6)** verstellbar ist, wobei die Verstellung über eine Rotationsbewegung eines Stellglieds **(5)** erreicht wird, und wobei die Getränkesubstratbevorratungseinrichtung **(2)** mit einer Auslassöffnung so gegenüber dem Mahlwerk **(3)** angeordnet ist, dass Getränkesubstrat **(23)** von einem Übergangsabschnitt der Getränkesubstratbevorratungseinrichtung **(2)** in einen Eingangsabschnitt **(17)** des Mahlwerks **(3)** gelangen kann Erfindungsgemäß ragt ein mit dem Stellglied **(5)** verbundenes Betätigungselement **(11)** zur Rotation des Stellglieds **(5)** durch den Übergangsabschnitt **(16)** in die Getränkesubstratbevorratungseinrichtung **(2)** hinein.

## Beschreibung

Die vorliegende Erfindung betrifft eine Mahleinheit für Getränkezubereitungsvorrichtungen nach dem Oberbegriff des Anspruchs 1 sowie eine Getränkezubereitungsvorrichtung, insbesondere eine Kaffee- und/oder Espressomaschine, mit einer Mahleinheit nach dem Oberbegriff des Anspruchs 11.

Aus dem Stand der Technik sind Mahleinheiten bekannt, die im Wesentlichen aus einer Getränkesubstratbevorratungseinrichtung, insbesondere einem Bevorratungsbehälter für Kaffeebohnen, und einem Mahlwerk zum Mahlen von Getränkesubstrat zu Substratmehl, insbesondere einem Mahlwerk zum Mahlen von Kaffeebohnen zu Kaffeebohnenmehl, bekannt die nicht ausschließlich aber bevorzugt als Teil, Baugruppen oder Komponente von Getränkezubereitungsvorrichtungen, insbesondere Kaffee- und/oder Espressomaschinen, zum Einsatz kommen. Dort dient die Mahleinheit dazu, ein möglichst optimales Getränk bereit zu stellen oder einen möglichst optimalen Brühvorgang des Getränkesubstrats oder Getränkesubstratmehls zu ermöglichen, indem das Getränkesubstrat frisch gemahlen und im frisch gemahlenen Zustand einer Brüheinheit der Getränkezubereitungsvorrichtung zugeführt oder zur Verfügung gestellt wird. Der Mahlvorgang und das gemahlene Substrat haben dabei einen Einfluss auf den Geschmack des Getränks.

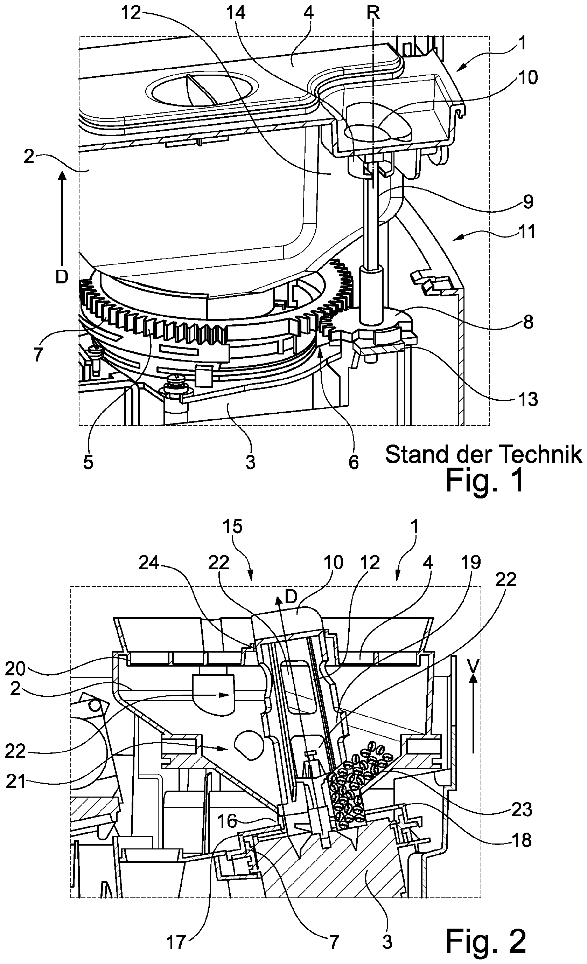

Um die Eigenschaften oder Charakteristika des aufgebrühten Getränks, insbesondere des Kaffees oder des Espressos zu beeinflussen, ist bei Vorrichtungen oder Mahleinheiten aus dem Stand der Technik bereits bekannt, den Mahlgrad des Getränkesubstrats, insbesondere der Kaffeebohnen, einstellbar zu gestalten. Beispielsweise zeigt die Figur 1 eine aus dem Stand der Technik bereits bekannte Lösung.

In der Regel wird der Mahlgrad dadurch verändert oder eingestellt, dass zwei Mahlelemente des Mahlwerks, beispielsweise ein Mahlring und ein Mahlkegel oder zwei Mahlscheiben in ihrer Position, insbesondere in ihrem Abstand, variiert oder verändert wird. In vielen Fällen hat es sich dabei als wünschenswert oder praktisch herausgestellt, wenn die Mahlgradverstellung über eine axiale Stellbewegung der Mahlelemente realisiert wird, die jedoch über ein Gewinde in eine Rotationsbewegung eines Stellglieds überführt und übertragen wird. Eine Veränderung der Position oder Ausrichtung des Stellglieds durch eine Drehbewegung führt dann zu einer axialen, in der Regel parallel zur Rotationsachse verlaufenden, Verstellung von wenigstens einem Mahlelement zum anderen oder zweiten Mahlelement, was wiederrum den Spalt zwischen den Mahlelementen und dadurch das Ergebnis des Mahlprozesses des Mahlwerks beeinflusst.

Die Rotation oder Verstellung des Stellglieds ist im Stand der Technik bereits mit unterschiedlichen Lösungen oder Lösungsansätzen adressiert worden.

Die Figur 1 zeigt beispielsweise eine Lösung, in der ein Betätigungselement vorgesehen ist, das auf das Stellglied einwirkt, wobei das Betätigungselement über eine Zahnradverbindung mit dem Stellglied verbunden ist. Das Betätigungselement kann dann innerhalb des Gehäuses der Getränkezubereitungsvorrichtung angeordnet sein. Der Nachteil an dieser Anordnung des Betätigungselements ist jedoch, dass die notwendige Mechanik aufwendig ist, eine Vielzahl von Einzelteilen benötigt und darüber hinaus in der Regel eine nachteilige Auswirkung auf das zur Verfügung stehende Volumen des Bohnenbehälters oder der Getränkesubstratbevorratungseinrichtung hat. Denn wie in der Figur 1 leicht erkennbar, wird die Getränkesubstratbevorratungseinrichtung oder der Bohnenbehälter so geformt, dass das Betätigungselement zum Zusammenwirken mit dem Stellring an dem Bohnenbehälter oder der Getränkesubstratbevorratungseinrichtung vorbei geführt werden kann.

Aufgabe der vorliegenden Erfindung ist es deshalb, eine Mahleinheit für eine Getränkezubereitungsvorrichtung, insbesondere für eine Kaffee- und/oder Espressomaschine, vorzuschlagen, die die Nachteile im Stand der Technik überwindet. Insbesondere ist es die Aufgabe der vorliegenden Erfindung, eine Mahleinheit mit Mahlgradverstellung zu realisieren, die eine einfachere Bauweise aufweist und/oder ein größeres Volumen der Getränkesubstratbevorratungseinrichtung ermöglicht.

Diese Aufgabe wird im Hinblick auf die Mahleinheit mit den Merkmalen des Anspruchs 1 gelöst. Bezüglich der Getränkezubereitungsvorrichtung wird diese Aufgabe mit den Merkmalen des Anspruchs 11 gelöst. Vorteilhafte Ausführungsformen sind Gegenstand der Unteransprüche, der Beschreibung, der Figurenbeschreibung und der Figuren.

Insgesamt sollen alle vorrichtungsmäßig offenbarten Merkmale auch als verfahrensmäßig offenbart gelten, und umgekehrt.

Die erfindungsgemäße Mahleinheit für eine Getränkezubereitungsvorrichtung, insbesondere Kaffee- und/oder Espressomaschine, umfasst eine Getränkesubstratbevorratungseinrichtung, insbesondere einen Bohnenbehälter, und ein Substratmahlwerk, bevorzugt ein Bohnenmahlwerk, zum Mahlen von Getränkesubstrat, bevorzugt Kaffeebohnen zu Substratmehl, insbesondere Kaffeebohnenmehl. Dabei umfasst das Mahlwerk ein erstes und ein zweites Mahlelement, die mittels eines, insbesondere elektromotorischen Antriebs, relativ zueinander um eine Drehachse verdrehbar gelagert sind, wobei der Abstand der Mahlelemente zueinander über eine Mahlgradverstelleinrichtung verstellbar ist, wobei die Verstellung über eine Rotationsbewegung eines Stellglieds, insbesondere um die Drehachse, erreicht wird. Ferner ist vorgesehen, dass die Getränkesubstratbevorratungseinrichtung mit einer Auslassöffnung so gegenüber, bevorzugt über, dem Mahlwerk angeordnet ist, dass das Getränkesubstrat, insbesondere die Kaffeebohnen, bevorzugt ausschließlich über Schwerkrafteinwirkung, von einem Übergangsabschnitt der Getränkesubstratbevorratungseinrichtung in einen Eingangsabschnitt des Mahlwerks, insbesondere zwischen die Mahlelemente, gelangen kann oder gefördert werden kann. Erfindungsgemäß ist dabei vorgesehen, dass ein mit dem rotatorisch bedienbarem Stellglied verbundenes Betätigungselement zur Rotation des Stellglieds vorgesehen ist, wobei das Betätigungselement durch den Übergangsabschnitt der Getränkesubstratbevorratungseinrichtung in die Getränkesubstratbevorratungseinrichtung hineinragt.

Die vorliegende Erfindung basiert also auf der Grundidee, das Betätigungselement zur Betätigung oder Rotation des Stellglieds zur Veränderung oder Variierung des Abstandes der Mahlelemente und damit zur Einstellung des Mahlgrads nicht mehr an der Getränkesubstratbevorratungseinrichtung, insbesondere dem Bohnenbehälter, vorbeizuführen oder in anderer Art und Weise das Stellglied zugänglich zu machen, sondern vielmehr das Betätigungselement in der Getränkesubstratbevorratungseinrichtung anzuordnen oder das Betätigungselement durch die Getränkesubstratbevorratungseinrichtung zu führen.

Dadurch können unterschiedliche Vorteile und vorteilhafte Wirkungen erreicht werden. Einerseits kann dadurch, wie nachfolgend noch im Detail beschrieben werden wird, die mechanische Anbindung oder die mechanische Zusammenwirkung zwischen Stellglied des Mahlwerks einerseits und Betätigungselement andererseits vereinfacht und verbessert werden. Gleichzeitig kann in vorteilhafter Weise eine Getränkesubstratbevorratungseinrichtung mit einem größeren Volumen verwendet werden, wobei das Volumen des Betätigungselements innerhalb der Getränkesubstratbevorratungseinrichtung deutlich weniger groß ist, als das Aussparungsvolumen, das benötigt wird, um ein Betätigungselement an der Getränkesubstratbevorratungseinrichtung vorbeizuführen, wie beispielsweise in Figur 1 dargestellt. Mit anderen Worten ausgedrückt bedeutet dies, dass die vorliegende Erfindung erkannt hat, dass es ohne eine Einbuße an Funktionalität oder Bedienbarkeit oder sonstige merkliche Nachteile möglich ist, das Betätigungselement zur Betätigung oder Rotation des Stellglieds zur Verstellung des Mahlgrads oder zur Betätigung der Mahlgradverstelleinrichtung in den Bohnenbehälter oder die Getränkesubstratbevorratungseinrichtung hinein zu verlegen.

Gemäß einer ersten vorteilhaften Ausführungsvariante der Mahleinheit, kann vorgesehen sein, dass sich das Betätigungselement bis zu einem oberen Rand besonders bevorzugt bis wenigstens zu einem oberen Rand der Getränkesubstratbevorratungseinrichtung erstreckt. Dies hat den Vorteil, dass das Betätigungselement auch bei einem vollständig oder bis an den oberen Rand gefüllten Getränkesubstratbevorratungseinrichtung für einen Benutzer oder Bediener optisch erkennbar und mechanisch bedienbar bleibt. Mit anderen Worten ausgedrückt bedeutet dies, dass das Betätigungselement sich bevorzugt von einem unteren oder bodenseitigen Übergangsabschnitt der Getränkesubstratbevorratungseinrichtung bis zu einem gegenüberliegenden oberen Rand der Getränkesubstratbevorratungseinrichtung und bevorzugt am oberen Rand der Getränkesubstratbevorratungseinrichtung über diesen Rand hinaus erstreckt und dabei zumindest zwischen dem unteren oder bodenseitigen Übergangsabschnitt und dem oberen Rand vollständig innerhalb der Getränkesubstratbevorratungseinrichtung angeordnet ist.

Der obere Rand der Getränkesubstratbevorratungseinrichtung kann beispielsweise durch ein entnehmbares Abdeckelement vorgegeben werden. Alternativ kann auch ein Gehäuseelement oder ein Gehäuseteil der Getränkezubereitungsvorrichtung den oberen Rand der Getränkesubstratbevorratungseinrichtung vorgeben.

In einer bevorzugten Ausführungsform ragt das Betätigungselement am oberen Rand der Getränkesubstratbevorratungseinrichtung über diese hinaus, wobei ein oberes Ende des Betätigungselements gleichzeitig jedoch innerhalb eines Gesamtgehäuses der Getränkezubereitungsvorrichtung verbleibt oder angeordnet ist. Dann kann beispielsweise über einen entnehmbaren oder klappbaren Teil des Gesamt- oder Außengehäuses der Getränkezubereitungsvorrichtung sowohl ein Zugang zu der Getränkesubstratbevorratungseinrichtung, insbesondere dem Bohnenbehälter, und gleichzeitig zu dem Betätigungselement geschaffen werden.

In einer weiteren, besonders bevorzugten Ausführungsform der Mahleinheit, kann vorgesehen sein, dass ein abnehmbarer Deckel der Getränkesubstratbevorratungseinrichtung eine Durchtrittsöffnung für das Betätigungselement, bevorzugt einen Grundkörper des Betätigungselements, aufweist. Der abnehmbare Deckel der Getränkesubstratbevorratungseinrichtung kann sowohl zur Geräuschdämmung der Mahleinheit als auch zur Reduzierung der Staubentwicklung dienen. Beim Vorsehen einer Durchtrittsöffnung für das Betätigungselement können dabei unterschiedliche vorteilhafte Wirkungen erzielt werden. Einerseits kann erreicht werden, dass das Betätigungselement und damit auch die Mahlgradverstelleinrichtung, nämlich über das Stellglied, auch bei aufgesetztem oder nichtentnommenem Deckel bedient und damit der Mahlgrad eingestellt werden kann. Gleichzeitig kann die Durchtrittsöffnung bei aufgesetztem Deckel als Führung oder Stabilisierung für das Betätigungselement dienen und somit die Bedienung oder Benutzung des Betätigungselements insgesamt erleichtern und das Betätigungselement vor Fehlbedienungen und insbesondere Beschädigungen schützen. Zusätzlich oder alternativ zu dem Deckel kann auch ein Fingerschutz mit einer Durchtrittsöffnung für das Betätigungselement, bevorzugt einen Grundkörper des Betätigungselements, vorgesehen sein, der einer Verletzungsgefahr durch einen Eingriff in das Mahlwerk entgegen wirken soll.

Gemäß einer weiteren, besonders wünschenswerten Ausgestaltung der Mahleinheit kann vorgesehen sein, dass im Inneren der Getränkesubstratbevorratungseinrichtung ein Steg mit einer Führungsöffnung für das Betätigungselement bevorzugt den Grundkörper des Betätigungselements, angeordnet ist. Der Steg mit Führungsöffnung kann ebenfalls die Führung des Betätigungselements durch die Getränkesubstratbevorratungseinrichtung oder im Inneren der Getränkesubstratbevorratungseinrichtung verbessern und erleichtern. Der Steg kann bevorzugt in einer oberen Hälfte der Getränkesubstratbevorratungseinrichtung, besonders bevorzugt im einem oberen Drittel der Getränkesubstratbevorratungseinrichtung angeordnet sein und kann vorteilhaft in horizontaler Richtung verlaufen. Die obere Hälfte oder das obere Drittel soll sich dabei nicht auf das Volumen der Getränkesubstratbevorratungseinrichtung sondern auf die Höhe der Getränkesubstratbevorratungseinrichtung beziehen. Eine Anordnung in der oberen Hälfte der Höhe oder in einem oberen Drittel der Höhe der Getränkesubstratbevorratungseinrichtung hat dabei den Vorteil, dass eine Führung in einer größeren Höhe und damit mit einem größeren Abstand zum Übergangsabschnitt der Getränkesubstratbevorratungseinrichtung und/oder dem Mahlwerk, insbesondere dem Stellglied, dazu führt, dass Drehmomente oder Kippmomente, die das Betätigungselement in eine nicht gewünschte Richtung verschwenken oder verkippen könnten, effektiv unterbunden oder minimiert werden können.

Zusätzlich oder alternativ zu einen Steg und/oder einen abnehmbaren Deckel und eine dortige Durchtrittsöffnung kann eine Führung des Betätigungselements auch über weitere Maßnahmen, wie beispielsweise Materialwahl und die Anbindung oder Verbindung des Betätigungselements mit oder an dem Stellglied erreicht oder verbessert werden, so dass sichergestellt, dass außer der gewünschten Bewegung oder Verstellung des Betätigungselements andere Bewegungen oder Krafteinflüsse nicht zum Verschleiß oder zur Beschädigung des Betätigungselements führen.

Gemäß einer weiteren, besonders bevorzugten Variante der Mahleinheit, kann vorgesehen sein, dass ein, bevorzugt zylindrischer, Grundkörper der Betätigungselements innerhalb der Getränkesubstratbevorratungseinrichtung angeordnet ist und mit einer Längsachse, insbesondere einer Mittellängsachse, parallel zur Drehachse des Mahlwerks oder der Mahlelemente, bevorzugt in Verlängerung der Drehachse der Mahlelemente, verläuft.

Die zylindrische Ausgestaltung des Grundkörpers des Betätigungselements führt zu einer verbesserten Stabilität. Wenn die Längsachse des Grundkörpers parallel zur Drehachse der Mahlelemente verläuft, kann eine einfache Anbindung und/oder eine einfache und effektive Kraftübertragung vom Betätigungselement auf das Stellglied erreicht werden, ohne, dass die Übertragung eine komplexe Mechanik benötigt. Besonders bevorzugt, wenn die Längsachse oder Mittellängsachse des Grundkörpers eine Verlängerung der Drehachse der Mahlelemente ausbildet oder darstellt, kann eine konzentrische Anordnung und eine entsprechend einfache und direkte oder unmittelbare Verbindung zwischen dem Stellglied des Mahlwerks oder der Mahlgradverstelleinrichtung einerseits und dem Betätigungselement andererseits erreicht werden, indem beispielsweise eine feste Verbindung zwischen dem Stellglied und dem Betätigungselement geschaffen wird, sodass eine Rotationsbewegung des Betätigungselements und dessen Grundkörpers um eine Rotationsachse in Verlängerung der Drehachse unmittelbar zu einer Rotation des Stellglieds um die Drehachse und damit zu einer Betätigung der Mahlgradverstelleinrichtung oder zu einer Variation des Abstands der Mahlelemente führt.

Gemäß einer weiteren, wünschenswerten Ausgestaltungsform der Mahleinheit, kann vorgesehen sein, dass ein bodenseitig angeordneter Kragen des Betätigungselements den Abschluss der Getränkesubstratbevorratungseinrichtung ausbildet oder den Übergang von der Getränkesubstratbevorratungseinrichtung zum Mahlwerk ausbildet. Dadurch können verschiedene Vorteile erreicht werden. Der Kragen, der bevorzugt eine Ausdehnung oder Erstreckung im Wesentlichen in radialer Richtung senkrecht zur Längsachse oder Mittellängsachse eines Grundkörpers des Betätigungselements aufweist, kann in vorteilhafter Weise genützt werden, um direkt und unmittelbar eine Verbindung mit dem Stellglied der Mahlgradverstelleinrichtung herzustellen. Gleichzeitig wird dadurch in konstruktiv einfacher Weise der bodenseitige Verschluss oder Abschluss der Getränkesubstratbevorratungseinrichtung erreicht.

Gemäß einer weiteren, ebenfalls vorteilhaften Variante der Mahleinheit, kann vorgesehen sein, dass der Grundkörper und/oder der Kragen wenigstens eine Ausnehmung aufweisen, durch die Getränkesubstrat aus der Getränkesubstratbevorratungseinrichtung in das Mahlwerk hindurchtreten kann. Eine Ausnehmung im Kragen führt dabei zu einem eher klassischen Übertritt zwischen der Getränkesubstratbevorratungseinrichtung und dem Mahlwerk, da wie vorangehend bereits ausgeführt, der Kragen bevorzugt einen bodenseitigen Abschluss der Getränkesubstratbevorratungseinrichtung oder den Übergang zum Mahlwerk darstellt. Die Ausbildung einer Ausnehmung im Grundkörper des Betätigungselements zusätzlich oder alternativ zu einer Ausbildung im Kragen führt zu einer eher ungewöhnlichen, gleichermaßen aber besonders vorteilhaften Überführung des Getränkesubstrats insbesondere der Kaffeebohnen von der Getränkesubstratbevorratungseinrichtung, insbesondere dem Bohnenbehälter, zum Mahlwerk. Denn die Ausnehmung im Grundkörper führt dazu, dass die durch die wenigstens eine Ausnehmung hindurchtretenden Kaffeebohnen oder das hindurchtretende Getränkesubstrat im Inneren des Betätigungselements, insbesondre des Grundkörpers, geführt und an ein bodenseitiges offenes Ende des Grundkörpers in das Mahlwerk eingeführt oder an das Mahlwerk überführt werden. Dabei kann die innenseitige Weiterleitung des Getränkesubstrats, insbesondere der Kaffeebohnen, bevorzugt in einem hohlzylindrisch geformten Grundkörper des Betätigungselements mit wenigstens einer Ausnehmung zum Durchtritt des Getränkesubstrats in besonders vorteilhafter Weise als Druckminderung fungieren, die dazu führt, dass unabhängig oder weitestgehend unabhängig vom Füllstand des Getränkesubstrats in der Getränkesubstratbevorratungseinrichtung bei jedem Mahlvorgang eine weitestgehend identische Menge von Getränkesubstrat in das Mahlwerk geführt wird und dort gemahlen wird.

Besonders bevorzugt kann vorgesehen sein, dass der Grundkörper eine untere und eine obere Reihe von, weiter bevorzugt über den Umfang des Grundkörpers gleichmäßig verteilte Ausnehmungen aufweist, durch die Getränkesubstrat aus der Getränkesubstratbevorratungseinrichtung über das Innere oder einen Innenraum des Grundkörpers und eine bodenseitige Öffnung des Grundkörpers in das Mahlwerk geleitet werden können oder hindurch treten können. Die mehreren Reihen von Ausnehmungen sorgen in besonders vorteilhafter Weise für einen gleichmäßigen Fluss oder eine gleichmäßige Zufuhr von Getränkesubstrat zu dem Mahlwerk unabhängig vom Füllstand der Getränkesubstratbevorratungseinrichtung. Weiterhin führt die Ausbildung des Betätigungselements mit einem Grundkörper, welches in mehreren, übereinander angeordneten Reihen, Ausnehmungen aufweist zu einer Materialeinsparung. Die gleichmäßige Anordnung der Ausnehmungen hat besondere Vorteile bezüglich einer mit einer Lichtschranke oder einer sonstigen Sensoreinrichtung bereitgestellten Füllzustandserkennung. Die Ausnehmungen können aber auch ungleichmäßig verteilt angeordnet sein.

Weiterhin kann besonders vorteilhaft vorgesehen sein, dass das Betätigungselement einendes, bevorzugt an einem vom Mahlwerk abgewandten Ende des Betätigungselements eine Griffeinrichtung, bevorzugt einen Zweifingersteg, aufweist. Durch eine solche Griffeinrichtung, insbesondere einen Zweifingersteg, kann das Betätigungselement besonders leicht und vorteilhaft von einem Bediener benutzt werden. Gleichzeitig kann ein Zweifingersteg oder auch eine andere Geometrie mit einer Vorzugsrichtung oder einer Liniensymmetrie dazu genutzt werden, nicht nur die Mahlgradverstelleinrichtung über eine Rotation des Stellglieds zu betätigen, sondern auch über eine im Umfeld der im Griffeinrichtung angeordnete Skala den Mahlgrad für den Bediener oder Benutzer zu verdeutlichen oder zu veranschaulichen. Bei einer solchen Ausgestaltung ragt bevorzugt die Griffeinrichtung über einen oberen Rand Getränkesubstratbevorratungseinrichtung hinaus, um dort eine Bedienung oder ein Angreifen zu ermöglichen.

Außerdem kann besonders bevorzugt vorgesehen sein, dass die Drehachse eine Neigung gegenüber der Vertikalrichtung aufweist. Dabei kann in vorteilhafter Weise das Betätigungselement trotzdem parallel oder sogar in Verlängerung der Drehachse und damit bevorzugt konzentrisch zur Drehachse angeordnet werden, weil für das innenliegend ausgeführte Betätigungselement oder das im Inneren der Getränkesubstratbevorratungseinrichtung geführte Betätigungselement keine besonderen Anforderungen im Hinblick auf dessen Ausrichtung oder den Verlauf der Längsachse bestehen. Dadurch kann sichergestellt werden, dass auch bei einem schräg oder geneigt angeordnetem Mahlwerk und einer daraus resultierenden Neigung der Drehachse gegenüber der Vertikalrichtung eine besonders einfache Ankopplung oder Kraftübertragung zwischen Betätigungselement und Stellglied sichergestellt und damit eine einfache Mechanik zur Betätigung der Mahlgradverstelleinrichtung ermöglicht wird. Die Neigung liegt gegenüber der Vertikalrichtung bevorzugt zwischen 5° und 35°. Die Funktion des Erfindungsgegenstandes ist aber nicht von der Neigung gegenüber der Vertikalen abhängig. Grundsätzlich kann auch eine Ausrichtung entlang der Vertikalrichtung vorgesehen sein.

Die oben genannte Aufgabe wird auch mit einer Getränkezubereitungsvorrichtung, insbesondere einer Kaffee- und/oder Espressomaschine mit einer Brüheinheit zum Aufbrühen von gemahlenem Getränkesubstrat gelöst, wobei das Getränkesubstrat oder Getränkesubstratmehl, insbesondere Kaffeebohnenmehl, in einem Mahlwerk aus Getränkesubstrat, insbesondere Kaffeebohnen, gewonnen wird, welches wiederum in einer Getränkesubstratbevorratungseinrichtung, insbesondere einem Bohnenbehälter, gelagert ist und wobei in erfindungsgemäßer Weise die Getränkesubstratbevorratungseinrichtung und das Mahlwerk als Mahleinheit nach einer der vorausgehenden Ausführungsformen ausgebildet sind.

Die erfindungsgemäße Mahleinheit und die erfindungsgemäße Getränkezubereitungsvorrichtung werden nachfolgend anhand von rein schematischen, Ausführungsbeispiele zeigenden Figuren, beispielhaft erläutert.

Darin zeigen:
- Fig. 1:: Eine bekannte Mahleinheit aus dem Stand der Technik;
- Fig. 2:: Eine Schnittansicht durch eine erfindungsgemäße Mahleinheit;
- Fig. 3:: Eine perspektivische Detailansicht eines erfindungsgemäßen Betätigungselements.

Die Figur 1 zeigt eine Mahleinheit 1 umfassend eine Getränkesubstratbevorratungseinrichtung 2, die als Bohnenbehälter ausgebildet ist und ein Mahlwerk 3. Die Getränkesubstratbevorratungseinrichtung 2 ist mit einem abnehmbaren Deckel 4 verschlossen. Das Mahlwerk 3 ist nicht im Detail dargestellt. Zu erkennen ist jedoch ein Stellglied 5 des Mahlwerks 3, welches als Teil einer Mahlgradverstelleinrichtung 6 fungiert. Die rotative Bewegung des Stellglieds 5 wird über eine Aufnahme eines Mahlelements, insbesondere einer Mahlscheibe oder eines Mahlrings, in einem Gewinde in eine lineare Bewegung umgewandelt. Die lineare Bewegung erfolgt dabei entlang der Drehachse D, um die auch die Mahlelemente des Mahlwerks 3 rotieren. Das Stellglied 5 umfasst eine Außenverzahnung 7, die wiederrum mit einer Außenverzahnung eines Zahnrads 8 im Eingriff steht. Das Zahnrad 8 ist zusammen mit der Stange 9 und der Griffeinrichtung 10 Teil eines Betätigungselements 11. Das Betätigungselement 11 erlaubt oder ermöglicht eine Einstellung des Mahlgrads oder eine Betätigung der Mahlgradverstelleinrichtung 6 durch eine Rotation des Betätigungselements 11 um eine Rotationsachse R die parallel zur Drehachse D verläuft. Dieses Rotationsbetätigungselement 11 wird über die Verzahnung des Zahnrads 8 auf die Verzahnung 7 des Stellglieds 5 übertragen. Wie in der Figur 1 zu erkennen ist, ist das Betätigungselement 11 außerhalb der Getränkesubstratbevorratungseinrichtung 2 geführt, was zu einer entsprechenden Aussparung 12 im Volumen der Getränkesubstratbevorratungseinrichtung 2 führt. Weiterhin ist erkennbar, dass das Betätigungselement 11 neben Zahnrad 8, Stange 9 und Griffeinrichtung 10 eine Aufnahme und/oder Führung 13 zur Aufnahme und Führung des Zahnrads 8 sowie eine weitere Aufnahme und/oder Führung 14 zur Befestigung und Führung der Griffeinrichtung 10 oder der Stange 9 bedarf. Insgesamt ist damit die Mechanik zur Ausbildung des Betätigungselements komplex oder aufwendig.

Die Figur 2 zeigt einen Schnitt durch eine erfindungsgemäße Getränkezubereitungsvorrichtung 15, umfassend eine erfindungsgemäße Mahleinheit 1. Das Mahlwerk 3 ist darin geneigt oder gewinkelt zur Vertikalrichtung V angeordnet, was auch dazu führt, dass die Drehachse D eine entsprechende Neigung gegenüber der Vertikalrichtung V aufweist. Der oberhalb oder über dem Mahlwerk 3 angeordnete Getränkesubstratbevorratungseinrichtung 2, die ebenfalls als Bohnenbehälter ausgeführt ist, wird ebenfalls mit einem entnehmbaren Deckel 4 verschlossen. Zusätzlich zum Deckel 4 oder als alternative zum Deckel 4 kann auch ein nicht im Detail dargestellter Fingerschutz vorgesehen sein, der dann bevorzugt nur mit Werkzeug oder Spezialwerkzeug entnehmbar ist. Der Fingerschutz kann als Sicherheitseinrichtung davor schützen, dass ein Finger oder ein anderes Körperteil eines Benutzers in das Mahlwerk gelangt. Bevorzugt kann der abnehmbare Deckel und/oder ein Fingerschutz der Getränkesubstratbevorratungseinrichtung 2 eine Durchtrittsöffnung für das Betätigungselement 11, bevorzugt einen Grundkörper 19 des Betätigungselements 11, aufweisen.

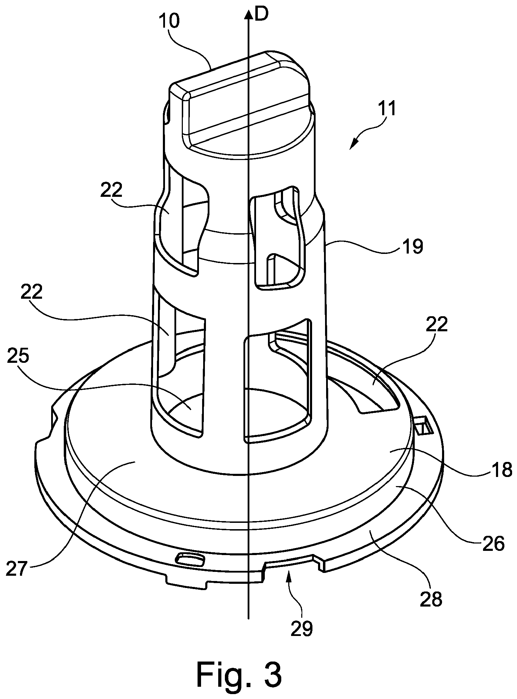

In der Figur 2 ist erkennbar, dass das Betätigungselement 11 innenliegend in der Getränkesubstratbevorratungseinrichtung 2 angeordnet ist und sich das Betätigungselement 11 von einem Übergangsabschnitt 16 zwischen der Getränkesubstratbevorratungseinrichtung 2 und einem Eingangsabschnitt 17 des Mahlwerks 3 in die Getränkesubstratbevorratungseinrichtung 2 hineinerstreckt oder hineinragt. Im Beispiel der Figur 2 verfügt das Betätigungselement 11 über einen bodenseitigen Kragen 18, auf dem im Rahmen der Beschreibung der Figur 3 nochmals detailliert eingegangen wird. An den im Wesentlichen radial verlaufenden Kragen 18 schließt sich nach obenhin ein im Wesentlichen zylindrischer, insbesondere hohlzylindrischer, Grundkörper 19 des Betätigungselements 11 an. An einem Ende, insbesondere einem dem Mahlwerk 3 gegenüberliegenden, Ende des Grundkörpers 19 oder des Betätigungselements 11 weist das Betätigungselement 11 eine Griffeinrichtung 10 auf. Wie in der Figur 2 dargestellt, ist die Mittellängsachse des hohlzylindrischen Grundkörpers des Betätigungselements 11 in Verlängerung oder koaxial zu der Drehachse D des Mahlwerks angeordnet. Damit verlaufen die Längsmittelachse des Betätigungselements 11 oder des Grundkörpers 19 des Betätigungselements 11, die Drehachse des Stellglieds 7 des Mahlwerks 3 und die Drehachse D des Mahlwerks 3 konzentrisch zueinander.

In der Figur 2 ist deutlich erkennbar, dass im Gegensatz zur Figur 1 die Getränkesubstratbevorratungseinrichtung 2 keinerlei Aussparungen benötigt, um das Betätigungselement 11 außen vorbeizuführen, da das Bestätigungselement 11 innenseitig oder innenliegend in der Getränkesubstratbevorratungseinrichtung 2 angeordnet ist und diese ausgehend vom Übergangsabschnitt durchsetzt. Dabei ragt oder erstreckt sich das Bestätigungselement 11 bis zu einem oberen Rand 20 der Getränkesubstratbevorratungseinrichtung 2 und mit der Griffeinrichtung 10 und Teilen des Grundkörpers 19 sogar über den oberen Rand 20 der Getränkesubstratbevorratungseinrichtung 2 hinaus.

Es ist bereits in der Schnittdarstellung der Figur 2 erkennbar - auch auf dies wird im Zusammenhang mit der Beschreibung der Figur 3 nochmals gesondert eingegangen werden -, dass der Grundkörper 19 des Betätigungselements 11 zwei Reihen 21 und 22 mit jeweils übereinander fluchtend und über den Umfang des hohlzylindrischen Grundkörpers 19 gleichmäßig verteilten Ausnehmungen 22 aufweist. Durch die Ausnehmungen 22 kann Getränkesubstrat, insbesondere Kaffeebohnen, in das Innere des hohlzylindrischen Grundkörpers 19 eintreten oder hindurch treten und von dort über ein offenes bodenseitiges Ende des Grundkörpers 19 in das Mahlwerk 3 oder einen Eingangsabschnitt des Mahlwerks 3 überführt werden. Die Form der Ausnehmungen entspricht bevorzugt entlang des Umfangs gekrümmten Rechtecken. Es können aber auch andere Formen zum Einsatz kommen.

Durch die konzentrische Anordnung des Betätigungselements 11 zum Stellglied 7 des Mahlwerks 3 oder der Mahlgradverstelleinrichtung 7, kann das Betätigungselement 11 direkt und unmittelbar mit dem Stellglied 5 verbunden werden, was bevorzugt über den bodenseitigen Kragen 18 des Betätigungselements 11 realisiert sein kann. In diesem Fall wird eine Rotation des Betätigungselements 11, insbesondere über die Griffeinrichtung 10 direkt, unmittelbar und ohne Übersetzung an das Stellglied des Mahlwerks oder der Mahlgradverstelleinrichtung übertragen. Damit wird in besonders einfacher Weise die Drehmomentübertragung oder die Ansteuerung oder Bedienung des Stellglieds ermöglicht.

In der Figur 2 ist auch angedeutet, dass zusätzlich zu den Ausnehmungen 22 im hohlzylindrischen Grundkörper 19 des Betätigungselements 11 auch durch den Kragen 18 Getränkesubstrat 23 in das Mahlwerk oder in den Eingangsabschnitt 17 des Mahlwerks 3 gelangen kann. Dies erfolgt über eine Ausnehmung im Kragen 18, die ebenfalls mit Bezug zur Figur 3 näher beschrieben werden wird.

Es ist in der Schnittdarstellung der Figur 2 erkennbar, dass der abnehmbare Deckel 4 der Getränkesubstratbevorratungseinrichtung 2 eine Durchtrittsöffnung 24 für das Betätigungselement 11, insbesondere den Grundkörper 19, aufweist. Die Durchtrittsöffnung 24 dient dabei nicht nur der Zugänglichmachung des Betätigungselements, insbesondere der Griffeinrichtung 10 des Betätigungselements 11, sondern auch zur Stabilisierung des Betätigungselements 11, weil durch die Durchtrittsöffnung 24 sichergestellt wird, dass das Bestätigungselement 11 nur oder zumindest im Wesentlichen um die Rotationsachse D gedreht wird aber ansonsten nicht geneigt oder geschwenkt wird.

Die Figur 3 zeigt nochmals das Betätigungselement 11 in einer vorteilhaften Ausführungsform gemäß der vorliegenden Erfindung. Am oberen Ende beginnend ist zunächst die Griffeinrichtung 10 angeordnet. Diese geht dann bevorzugt einstückig und/oder monolithisch in den zylindrischen, insbesondere hohlzylindrischen, Grundkörper 19 über, der seinerseits auf der Bodenseite oder der Griffeinrichtung 10 gegenüberliegenden Seite eine Öffnung 25 aufweist, Der Grundkörper 19 geht abermals einstückig und/oder monolithisch in den Kragen 18 über, der in radialer Richtung, und damit senkrecht zur Längs- und Drehachse D, eine Stufung 26 ausbildet. Der radial innere oder obere Teil 27 des Kragens 18, wie auch der hohlzylindrische Grundkörper, weisen Ausnehmungen 22 zum Durchtritt von Getränkesubstrat, bevorzugt Kaffeebohnen, auf. Der radial innere oder obere Teil 27 des Kragens 18 kann den unteren Abschluss oder das untere Ende des Übergangsabschnitts der Getränkesubstratbevorratungseinrichtung ausbilden. Der äußere oder untere Abschnitt 28 des Kragens 18 kann genutzt werden, um eine Verbindung zu einem Stellglied der Mahlgradverstelleinrichtung und/oder des Mahlwerks 3 herzustellen. Dafür weist der äußere oder untere Abschnitt 28 Verbindungsmittel oder Rastmittel 29 auf, die in eine entsprechend komplementäre Kontur des Stellglieds des Mahlwerks eingerastet werden können.

### Bezugszeichenliste

- 1: Mahleinheit
- 2: Getränkesubstratbevorratungseinrichtung
- 3: Mahlwerk
- 4: Deckel
- 5: Stellglied
- 6: Mahlgradverstelleinrichtung
- 7: Verzahnung
- 8: Zahnrad
- 9: Stange
- 10: Griffeinrichtung
- 11: Betätigungselement
- 12: Aussparung
- 14: Führung
- 15: Getränkezubereitungsvorrichtung
- 16: Übergangsabschnitt
- 17: Eingangsabschnitt
- 18: Kragen
- 19: Grundkörper
- 21: Reihe
- 22: Reihe
- 23: Getränkesubstrat
- 24: Durchtrittsöffnung
- 25: Öffnung
- 26: Stufung
- 27: Teil
- 28: Abschnitt
- 29: Rastmittel
- D: Drehachse
- R: Rotationsachse
- V: Vertikalrichtung

## Patentansprüche

1. Mahleinheit **(1)** für eine Getränkezubereitungsvorrichtung **(15)**, insbesondere Kaffee- und/oder Espressomaschine, mit einer Getränkesubstratbevorratungseinrichtung **(2)** und einem SubstratMahlwerk **(3)** zum Mahlen von Getränkesubstrat **(23)** zu Substratmehl mit einem ersten und einem zweiten Mahlelement, die mittels eines, insbesondere elektromotorischen Antriebs, relativ zueinander um eine Drehachse verdrehbar gelagert sind, wobei der Abstand der Mahlelemente zueinander über eine Mahlgradverstelleinrichtung **(6)** verstellbar ist, wobei die Verstellung über eine Rotationsbewegung eines Stellglieds **(5)**, insbesondere um die Drehachse, erreicht wird, und wobei die Getränkesubstratbevorratungseinrichtung **(2)** mit einer Auslassöffnung so gegenüber, bevorzugt über, dem Mahlwerk **(3)** angeordnet ist, dass Getränkesubstrat **(23)** , bevorzugt ausschließlich über Schwerkrafteinwirkung, von einem Übergangsabschnitt der Getränkesubstratbevorratungseinrichtung **(2)** in einen Eingangsabschnitt **(17)** des Mahlwerks **(3)**, insbesondere zwischen die Mahlelemente, gelangen kann,
**dadurch gekennzeichnet, dass**
ein mit dem Stellglied **(5)** verbundenes Betätigungselement **(11)** zur Rotation des Stellglieds **(5)** durch den Übergangsabschnitt **(16)** in die Getränkesubstratbevorratungseinrichtung **(2)** hineinragt.

2. Mahleinheit nach Anspruch 1,
**dadurch gekennzeichnet,**
**dass** sich das Betätigungselement **(11)** bis zu einem oberen Rand der Getränkesubstratbevorratungseinrichtung **(2)** erstreckt.

3. Mahleinheit nach einem der Ansprüche 1 oder 2,
**dadurch gekennzeichnet,**
**dass** ein abnehmbarer Deckel **(4)** und/oder ein Fingerschutz der Getränkesubstratbevorratungseinrichtung **(2)** eine Durchtrittsöffnung für das Betätigungselement **(11),** bevorzugt einen Grundkörper **(19)** des Betätigungselements **(11)**, aufweist.

4. Mahleinheit nach einem der Ansprüche 1 bis 3,
**dadurch gekennzeichnet,**
**dass** im Inneren der Getränkesubstratbevorratungseinrichtung **(2)** ein Steg mit einer Führungsöffnung für das Betätigungselement **(11)**, bevorzugt den Grundkörper **(19)** des Betätigungselements **(11),** angeordnet ist.

5. Mahleinheit nach einem der Ansprüche 1 bis 4,
**dadurch gekennzeichnet,**
**dass** ein, bevorzugt zylindrischer, Grundkörper **(19)** des Betätigungselements **(11)** innerhalb der Substratbevorratungseinrichtung angeordnet ist und mit einer Längsachse, insbesondere Mittellängsachse, parallel zur Drehachse **(D),** bevorzugt in Verlängerung der Drehachse **(D),** verläuft.

6. Mahleinheit nach einem der Ansprüche 1 bis 5,
**dadurch gekennzeichnet,**
**dass** ein bodenseitig angeordneter Kragen **(18)** des Betätigungselements **(11)** den Abschluss der Getränkesubstratbevorratungseinrichtung **(2)** ausbildet oder den Übergang von der Getränkesubstratbevorratungseinrichtung **(2)** zum Mahlwerk **(3)** ausbildet.

7. Mahleinheit nach einem der Ansprüche 1 bis 6,
**dadurch gekennzeichnet,**
**dass** der Grundkörper **(19)** und/oder Kragen **(18)** wenigstens eine Ausnehmung aufweisen, durch die Getränkesubstrat **(23)** aus der Getränkesubstratbevorratungseinrichtung **(2)** in das Mahlwerk **(3)** hindurchtreten können.

8. Mahleinheit nach einem der Ansprüche 1 bis 7,
**dadurch gekennzeichnet,**
**dass** der Grundkörper **(19)** eine untere und eine obere Reihe **(21, 22)** von, bevorzugt über den Umfang des Grundkörpers **(19)** gleichmäßig verteilte, Ausnehmungen aufweist, durch die Getränkesubstrat **(23)** aus der Getränkesubstratbevorratungseinrichtung **(2)** in das Mahlwerk **(3)** hindurchtreten können.

9. Mahleinheit nach einem der Ansprüche 1 bis 8,
**dadurch gekennzeichnet,**
**dass** das Betätigungselement **(11)** einendes eine Griffeinrichtung **(10)**, bevorzugt einen Zweifingersteg, aufweist.

10. Mahleinheit nach einem der Ansprüche 1 bis 9,
**dadurch gekennzeichnet,**
**dass** die Drehachse **(D)** eine Neigung gegenüber der Vertikalrichtung **(V)** aufweist.

11. Getränkezubereitungsvorrichtung, insbesondere Kaffee- und/oder Espressomaschine, mit einer Brüheinheit zum Aufbrühen von gemahlenen Getränkesubstrat, wobei das Getränkesubstrat, insbesondere Kaffeebohnenmehl, in einem Mahlwerk **(3)** aus Getränkesubstrat gewonnen wird, das in einer Getränkesubstratbevorratungseinrichtung **(2)** gelagert ist,
**dadurch gekennzeichnet,**
**dass** die Getränkesubstratbevorratungseinrichtung **(2)** und das Mahlwerk **(3)** als Mahleinheit **(1)** nach einem der Ansprüche 1 bis 9 ausgebildet sind.
